# EUROPÄISCHE PATENTANMELDUNG

(11) **EP 2 476 595 A2**
(43) Veröffentlichungstag der Anmeldung: **18.07.2012**
(21) Anmeldenummer: 11192030.2
(22) Anmeldetag: 06.12.2011
(51) Int. Cl.: B60W 10/06, B60W 10/08, B60W 20/00

(54) **Verfahren zum Betreiben eines Hybridantriebs sowie Steuerungseinrichtung eines Hybridantriebs**

(30) Priorität: 12.01.2011 DE 102011002541
(71) Anmelder: ZF Friedrichshafen AG, 88038 Friedrichshafen (DE)
(72) Erfinder: Kuberczyk, Raffael, 88214 Ravensburg (DE)

(57) **Zusammenfassung**

Verfahren zum Betreiben eines Hybridantriebs (1) mit einer als aufgeladene Brennkraftmaschine ausgebildeten ersten Antriebsquelle (2) und einer insbesondere als elektrische Maschine ausgebildeten zweiten Antriebsquelle (3), wobei die zweite Antriebsquelle zum Aufladen eines mit derselben zusammenwirkenden Energiespeichers (4) generatorisch und zum Entladen des Energiespeichers (4) motorisch betrieben wird, wobei abhängig von einem Fahrerwunschmoment einerseits von der ersten Antriebsquelle (2) und andererseits von der zweiten Antriebsquelle (2) im motorischen Betrieb derselben Antriebsmoment anforderbar ist, und wobei bei einer Erhöhung des Fahrerwunschmoments zur Gewährleistung eines kraftstoffverbrauchsreduzierten und emissionsreduzierten Betriebs des Hybridantriebs (1) abhängig von einem Ladezustand des Energiespeichers (4) eine Momentanforderung an die erste Antriebsquelle (2) verzögert und/oder reduziert wird, wobei die hierdurch bewirkte, reduzierte Dynamik durch eine Momentanforderung an die zweite Antriebsquelle (3) kompensiert wird.

## Beschreibung

Die Erfindung betrifft ein Verfahren zum Betreiben eines Hybridantriebs nach dem Oberbegriff des Anspruchs 1. Des Weiteren betrifft die Erfindung eine Steuerungseinrichtung eines Hybridantriebs nach dem Oberbegriff des Anspruchs 9.

Zur Reduzierung des Kraftstoffverbrauchs sowie der Abgasemissionen kommen in Kraftfahrzeugen zunehmend Hybridantriebe zur Anwendung. Ein Hybridantrieb umfasst eine erste Antriebsquelle, die als Brennkraftmaschine bzw. Verbrennungsmotor ausgeführt ist, sowie eine zweite Antriebsquelle, die vorzugsweise als elektrische Maschine ausgeführt ist. Mit der zweiten Antriebsquelle wirkt ein Energiespeicher zusammen, der im generatorischen Betrieb der zweiten Antriebsquelle stärker aufgeladen und der im motorischen Betrieb der zweiten Antriebsquelle stärker entladen wird. Bei diesem Energiespeicher kann es sich zum Beispiel um einen elektrischen Energiespeicher, einen mechanischen Energiespeicher wie zum Beispiel einen Schwungmassenspeicher oder auch um einen hydraulischen Energiespeicher handeln.

Die hier vorliegende Erfindung betrifft nun ein Verfahren zum Betrieben eines Hybridantriebs sowie eine Steuerungseinrichtung eines solchen Hybridantriebs, bei welchem die erste Antriebsquelle als aufgeladene Brennkraftmaschine, so zum Beispiel als abgasturboaufgeladener Dieselmotor oder abgasturboaufgeladener Ottomotor, ausgeführt ist. Mit der hier vorliegenden Erfindung soll bei einem solchen Hybridantrieb bei einer spontanen bzw. transienten Momentanforderung durch einen Fahrer ein kraftstoffverbrauchsreduzierter und emissionsreduzierter Betrieb des Hybridantriebs gewährleistet werden.

Hiervon ausgehend liegt der vorliegenden Erfindung die Aufgabe zu Grunde, ein neuartiges Verfahren zum Betreiben eines Hybridantriebs sowie eine neuartige Steuerungseinrichtung eines Hybridantriebs zu schaffen.

Diese Aufgabe wird durch ein Verfahren gemäß Anspruch 1 gelöst.

Erfindungsgemäß wird bei einer Erhöhung des Fahrerwunschmoments zur Gewährleistung eines kraftstoffverbrauchsreduzierten und emissionsreduzierten Betriebs des Hybridantriebs abhängig von einem Ladezustand des Energiespeichers eine Momentanforderung an die erste Antriebsquelle, nämlich an die aufgeladene Brennkraftmaschine, verzögert und/oder reduziert, wobei die hierdurch bewirkte, reduzierte Dynamik durch eine Momentanforderung an die zweite Antriebsquelle, die vorzugsweise als elektrische Maschine ausgeführt ist, kompensiert wird. So kann bei einer spontanen bzw. transienten Momentanforderung bzw. Erhöhung des Fahrerwunschmoments ein kraftstoffverbrauchsreduzierter und emissionsreduzierter Betrieb des Hybridantriebs ohne Verschlechterung bzw. Reduzierung der Dynamik bereitgestellt werden.

Nach einer ersten vorteilhaften Weiterbildung wird dann, wenn der Ladezustand des Energiespeichers relativ hoch ist, die Momentanforderung an die erste Antriebsquelle derart verzögert und/oder reduziert, dass bei einer treppenartigen oder sprungartigen Erhöhung des Fahrerwunschmoments die Momentanforderung an die erste Antriebsquelle zunächst sprungartig oder mit maximalem zeitlichen Gradienten maximal auf das maximal saugmotorisch ohne Aufladung bereitstellbare Moment erhöht wird, wobei anschließend die Momentanforderung an die erste Antriebsquelle in etwa konstant gehalten wird, und wobei darauffolgend die Momentanforderung an die erste Antriebsquelle auf das Fahrerwunschmoment relativ schnell kontinuierlich erhöht wird. Nach einer zweiten, zur ersten vorteilhaften Weiterbildung alternativen vorteilhaften Weiterbildung wird dann, wenn der Ladezustand des Energiespeichers relativ hoch ist, die Momentanforderung an die erste Antriebsquelle derart verzögert und/oder reduziert, dass bei einer treppenartigen oder sprungartigen Erhöhung des Fahrerwunschmoments die Momentanforderung an die erste Antriebsquelle auf das Fahrerwunschmoment relativ schnell kontinuierlich erhöht wird. Mit diesen beiden Weiterbildungen des Verfahrens kann dann, wenn der Ladezustand des Energiespeichers relativ hoch ist, eine sehr hohe absolute Emissionsreduzierung gewährleistet werden. Nach diesen vorteilhaften Weiterbildungen wird die Momentanforderung an die erste Antriebsquelle, nämlich an die aufgeladene Brennkraftmaschine, relativ stark reduziert und/oder verlangsamt bzw. phlegmatisiert und durch eine entsprechend hohe Momentanforderung an die zweite Antriebsquelle der mit derselben zusammenwirkende elektrische Energiespeicher relativ stark entladen.

Vorzugsweise wird dann, wenn der Ladezustand des Energiespeichers relativ gering ist, die Momentanforderung an die erste Antriebsquelle derart verzögert und/oder reduziert, dass bei einer treppenartigen oder sprungartigen Erhöhung des Fahrerwunschmoments die Momentanforderung an die erste Antriebsquelle zunächst sprungartig oder mit maximalem zeitlichen Gradienten maximal auf das maximal saugmotorisch ohne Aufladung bereitstellbare Moment erhöht wird, wobei anschließend die Momentanforderung an die erste Antriebsquelle auf das Fahrerwunschmoment relativ langsam kontinuierlich erhöht wird. Mit diesem Betrieb des Hybridantriebs kann dann, wenn der Ladezustand des Energiespeichers relativ gering ist, bezogen auf die von der zweiten Antriebsquelle in den Antriebsstrang eingetragenen Energie eine hohe spezifische Emissionsreduzierung realisiert bzw. bereitgestellt werden.

Dann, wenn die aufgeladene Brennkraftmaschine ein abgasturboladeraufgeladener Dieselmotor ist, wird die Beeinflussung der Momentanforderung bei einem Verbrennungsluft-Kraftstoff-Verhältnis A»1 für den Dieselmotor durchgeführt, wobei zum nachfolgenden stärken Aufladen des Energiespeichers im generatorischen Betrieb der zweiten Antriebsquelle der Dieselmotor in einem Teilhomogenbetrieb oder Homogenbetrieb betrieben wird. Bei einer als abgasturboaufgeladener Dieselmotor ausgebildeten Brennkraftmaschine kann so ein emissionsreduziertes Aufladen des Energiespeichers, der mit der zweiten Antriebsquelle zusammenwirkt, gewährleistet werden. Im Teilhomogenbetrieb oder Homogenbetrieb des Dieselmotors fallen an demselben relativ wenige Emissionen an.

Dann, wenn die aufgeladene Brennkraftmaschine ein abgasturboladeraufgeladener Ottomotor mit Vormischung von Verbrennungsluft und Kraftstoff ist, wird die Beeinflussung der Momentanforderung im geschichteten Betrieb des Ottomotors durchgeführt wird, in welchem derselbe mit einem Verbrennungsluft-Kraftstoff-Verhältnis λ»1 betrieben wird, wobei zum nachfolgenden stärken Aufladen des Energiespeichers im generatorischen Betrieb der zweiten Antriebsquelle eine Betriebspunktverschiebung oder Umschaltung des Ottomotors durchgeführt wird, um im generatorischen Betrieb der zweiten Antriebsquelle den Ottomotor mit einem Verbrennungsluft-Kraftstoff-Verhältnis λ=1 zu betreiben.

Bei einer als abgasturboaufgeladener Ottomotor ausgebildeten Brennkraftmaschine kann so ebenfalls ein nachfolgendes Aufladen des Energiespeichers bei geringen Emissionen des Ottomotors realisiert werden. Bei einem Verbrennungsluft-Kraftstoff-Verhältnis λ=1 fallen an einem abgasturboaufgeladenen Ottomotor relativ wenige Emissionen an.

Die erfindungsgemäße Steuerungseinrichtung ist in Anspruch 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines Hybridantriebs mit einer erfindungsgemäßen Steuerungseinrichtung;
- Fig. 2: ein Diagramm zur Verdeutlichung des Betriebs eines Ottomotors mit Vormischung von Verbrennungsluft und Kraftstoff;
- Fig. 3: ein erstes Diagramm zur Verdeutlichung des erfindungsgemäßen Verfahrens bzw. der Funktionsweise der erfindungsgemäßen Steuerungseinrichtung; und
- Fig. 4: ein zweites Diagramm zur Verdeutlichung des erfindungsgemäßen Verfahrens bzw. der Funktionsweise der erfindungsgemäßen Steuerungseinrichtung.

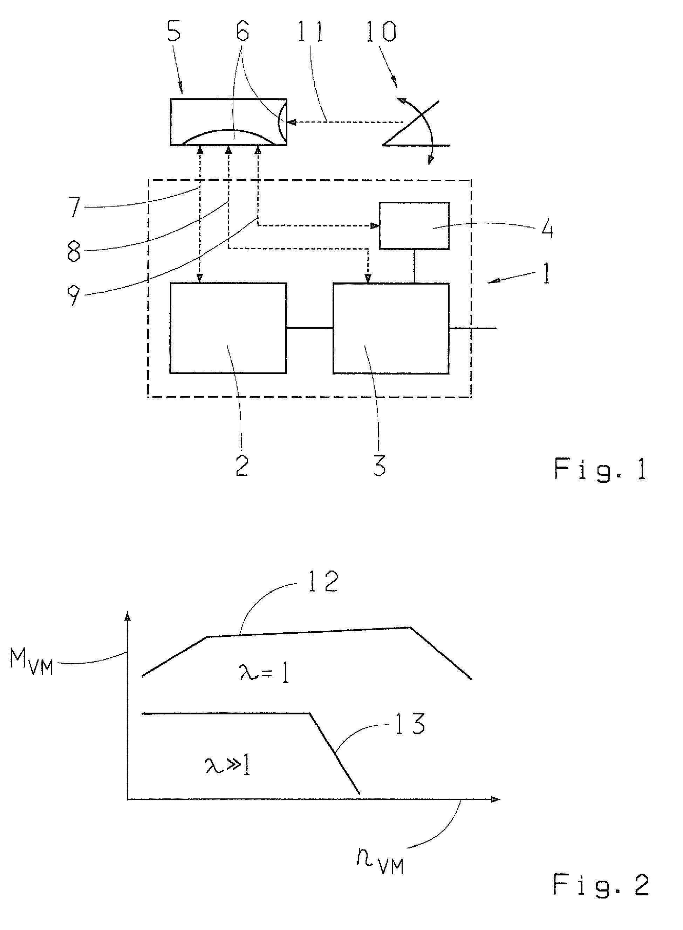

Fig. 1 zeigt stark schematisiert einen Hybridantrieb 1, der als erste Antriebsquelle 2 eine aufgeladene Brennkraftmaschine und als zweite Antriebsquelle 3 eine elektrische Maschine umfasst. Mit der zweiten Antriebsquelle 3 wirkt ein Energiespeicher 4 zusammen, bei welchem es sich vorzugsweise um einen elektrischen Energiespeicher handelt. Beim Energiespeicher 4 kann es sich auch um einen mechanischen Energiespeicher wie einen Schwungmassenspeicher oder um einen hydraulischen Energiespeicher handeln.

Dem Hybridantrieb 1 ist eine Steuerungseinrichtung 5 zugeordnet, um den Betrieb des Hybridantriebs zu steuern oder zu regeln, wobei die Steuerungseinrichtung 5 mit der ersten Antriebsquelle 2, der zweiten Antriebsquelle 3 und dem Energiespeicher 4 über eine Datenschnittstelle 6 gemäß der strichpunktierten Pfeile 7, 8 und 9 Daten austauscht.

So tauscht die Steuerungseinrichtung 5 mit der als aufgeladene Brennkraftmaschine ausgebildeten ersten Antriebsquelle 2 gemäß dem Pfeil 7 Daten aus. Ferner tauscht die Steuerungseinrichtung 5 mit der vorzugsweise als elektrische Maschine ausgebildeten zweiten Antriebsquelle 3 gemäß dem Pfeil 8 und mit dem Energiespeicher 4 gemäß dem Pfeil 9 Daten aus.

Ferner zeigt Fig. 1 ein Fahrpedal 10, mit welchem ein Fahrer ein Fahrerwunschmoment durch Betätigen des Fahrpedals vorgeben kann, wobei eine fahrerseitige Betätigung des Fahrpedals 10 gemäß dem Pfeil 11 der Steuerungseinrichtung 5 ebenfalls über die Schnittstelle 6 bereitgestellt wird.

Im Betrieb des Hybridantriebs kann ein Fahrerwunschmoment, welches ein Fahrer durch Betätigung des Fahrpedals 10 vorgibt, einerseits von der ersten Antriebsquelle 2, also von der aufgeladenen Brennkraftmaschine, und andererseits von der zweiten Antriebsquelle 3, insbesondere der elektrischen Maschine, an einem Abtrieb bereitgestellt werden. Dann, wenn die zweite Antriebsquelle 3 motorisch betrieben wird, stellt dieselbe am Abtrieb ein Antriebsmoment unter stärkerer Entladung des Energiespeichers 4 bereit. Dann hingegen, wenn die zweite Antriebsquelle 3 generatorisch betrieben wird, dient dieselbe dem stärkeren Aufladen des Energiespeichers 4, wobei dann die Antriebsquelle 3 am Abtrieb kein Antriebsmoment bereitstellt.

Wie bereits ausgeführt, handelt es sich bei der ersten Antriebsquelle 2 um eine aufgeladene Brennkraftmaschine bzw. einen aufgeladenen Verbrennungsmotor. Fig. 2 zeigt für eine als abgasturboaufgeladener Ottomotor mit Saugrohr- und Direkteinspritzung ausgebildete Brennkraftmaschine über der Drehzahl n_{VM} des Verbrennungsmotors bzw. der Brennkraftmaschine das von derselben bereitstellbare Moment M_{VM}.

In Fig. 2 sind zwei Kennlinien 12, 13 eingetragen sind, nämlich eine erste Kennlinie 12, die der Volllastkennlinie der aufgeladenen Brennkraftmaschine bzw. des aufgeladenen Verbrennungsmotors entspricht, und eine zweite Kennlinie 13, die den sogenannten quantitativen Lastregelungsbetriebbereich λ=1 des Verbrennungsmotors bzw. der Brennkraftmaschine 2 vom sogenannten geschichteten Verbrennungsbetriebbereich (λ»1) desselben trennt.

Im sogenannten quantitativen Lastregelungsbetriebbereich des Verbrennungsmotors 2 wird der als Ottomotor ausgebildete Verbrennungsmotor mit einem Verbrennungsluft-Kraftstoff-Verhältnis λ=1 betrieben. Im geschichteten Verbrennungsbetriebbereich des als Ottomotor ausgebildeten Verbrennungsmotors hingegen ist das Verbrennungsluft-Kraftstoff-Verhältnis λ»1.

Im sogenannten geschichteten Verbrennungsbetriebbereich λ»1 wird in einem Ottomotor der Kraftstoff so in die Zylinder desselben eingebracht, dass sich innerhalb der Zylinder der Kraftstoff inhomogen verteilt, nämlich derart, dass der Kraftstoff ausschließlich im Bereich von Zündkerzen der Zylinder in dieselben gebracht und verbrannt wird, sodass demnach innerhalb der Zylinder ein Verbrennungsluftüberschuss herrscht. Ein solcher geschichteter Verbrennungsbetriebbereich eines Ottomotors ist insbesondere im Teillastbetrieb desselben im Vorteil, um Drosselverluste, die sich im quantitativen Lastregelungsbetriebbereich λ=1 desselben einstellen, zu verringern.

Im Sinne der hier vorliegenden Erfindung wird nun vorgeschlagen, dass bei einer fahrerseitigen Erhöhung des Fahrerwunschmoments, die durch eine entsprechende Betätigung des Fahrpedals 10 fahrerseitig vorgegeben wird, zur Gewährleistung eines kraftstoffverbrauchreduzierten und emissionsreduzierten Betriebs des Hybridantriebs 1 abhängig von einem Ladezustand des Energiespeichers 4 eine Momentanforderung an die erste Antriebsquelle 2, also eine Momentanforderung an die aufgeladene Brennkraftmaschine, verzögert und/oder reduziert wird, wobei eine hierdurch bewirkte, reduzierte Dynamik des Verbrennungsmotors bzw. der Brennkraftmaschine 2 durch eine Momentanforderung an die zweite Antriebsquelle 3, die vorzugsweise als elektrische Maschine ausgebildet ist, kompensiert wird.

Dann, wenn es sich bei der aufgeladenen Brennkraftmaschine um einen abgasturboaufgeladenen Ottomotor mit Saugrohr- und Direkteinspritzung, erfolgt diese Verzögerung und/oder Reduzierung der Momentanforderung an den Verbrennungsmotor 2 und die Kompensation durch die zweite Antriebsquelle 3 insbesondere ausschließlich im geschichteten Verbrennungsbetriebbereich des Ottomotors, in welchem dieselben mit einem Verbrennungsluft-Kraftstoff-Verhältnis λ» 1 betrieben wird, um so bei einer spontanen bzw. transienten Momentanforderung bzw. Erhöhung des Fahrerwunschmoments ein Optimum an Kraftstoffverbrauchsreduzierung und Emissionsreduzierung zu gewährleisten.

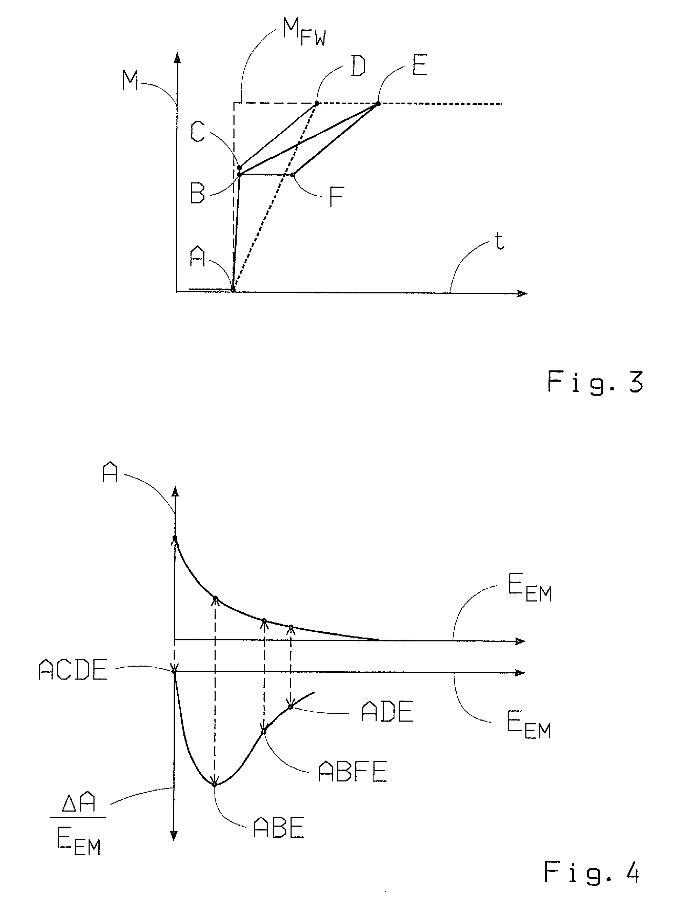

Weitere Details hinsichtlich der Verzögerung und/oder Reduzierung der Momentanforderung an die erste Antriebsquelle 2, nämlich die aufgeladene Brennkraftmaschine, ergeben sich aus Fig. 3, wobei in Fig. 3 über der Zeit t bei Anliegen einer treppenartigen oder sprungartigen Erhöhung des Fahrerwunschmoments M_{FW} unterschiedliche Momentanforderungen an die erste Antriebsquelle 2 und damit die aufgeladene Brennkraftmaschine gezeigt sind.

Nach dem Stand der Technik würde bei Anliegen einer sprungartigen oder treppenartigen Erhöhung des Fahrerwunschmoments M_{FW} für eine aufgeladene Brennkraftmaschine eine Momentanforderung erzeugt, die dem durch die Punkte A, C, D und E definierten Verlauf folgen würde. Beim Punkt C handelt es ich um das maximal saugmotorisch ohne Aufladung von der Brennkraftmaschine bzw. dem Verbrennungsmotor bereitstellbare Moment. Die Punkte D und E liegen auf dem Fahrerwunschmoment M_{FW}. Nach dem Stand der Technik würde demnach bei Anliegen einer treppenartigen oder sprungartigen Erhöhung des Fahrerwunschmoments M_{FW} die Momentanforderung an die erste Antriebsquelle 2, also die aufgeladene Brennkraftmaschine, zunächst sprungartig oder mit maximalem zeitlichen Gradienten auf das maximal saugmotorisch ohne Aufladung bereitstellbare Moment (Punkt C in Fig. 3) erhöht, wobei anschließend die Momentanforderung an die erste Antriebsquelle 2, also die aufgeladene Brennkraftmaschine, ausgehend von diesem maximal saugmotorisch ohne Aufladung bereitstellbare Moment (Punkt C) möglichst schnell mit einem relativ großen, zeitlichen Gradienten auf das Fahrwunschmoment M_{FW} (Punkt D) erhöht und nachfolgend konstant gehalten würde.

Im Unterschied hierzu wird dann, wenn der Ladezustand des Energiespeichers 4 relativ hoch ist, nach einer Weiterbildung der Erfindung die Momentanforderung an die erste Antriebsquelle 2, also die aufgeladene Brennkraftmaschine bzw. den aufgeladenen Verbrennungsmotor, derart verzögert und/oder reduziert, dass bei einer treppenartigen oder sprungartigen Erhöhung des Fahrerwunschmoment M_{FW} die Momentanforderung an die erste Antriebsquelle 2, also die aufgeladene Brennkraftmaschine, zunächst sprungartig oder mit maximalem zeitlichen Gradienten maximal auf das maximal saugmotorisch ohne Aufladung bereitstellbare Moment erhöht wird, vorzugsweise auf ein Moment (Punkt B in Fig. 3), das geringer ist als das maximal saugmotorisch ohne Aufladung bereitstellbare Moment (Punkt C). Gemäß Fig. 3 wird nach dieser vorteilhaften Weiterbildung der Erfindung die Momentanforderung an die Brennkraftmaschine 2 zunächst sprungartig oder mit maximalem, zeitlichem Gradienten auf ein Moment erhöht, dass (Punkt B) unterhalb des maximal saugmotorisch bereitstellbaren Moments (Punkt C) liegt. Anschließend wird die Momentanforderung an die erste Antriebsquelle 2, also an die aufgeladene Brennkraftmaschine, für eine definierte Zeit in etwa konstant gehalten (bis zum Punkt F), und darauffolgend wird die Momentanforderung an die erste Antriebsquelle relativ schnell kontinuierlich auf das Fahrerwunschmoment M_{FW} erhöht (in Fig. 3 definiert durch die Punkte F und E).

Nach dieser vorteilhaften Weiterbildung der Erfindung wird demnach bei einem relativ hohen Ladezustand des elektrischen Energiespeichers bei Vorliegen einer treppenartigen oder sprungartigen Erhöhung des Fahrerwunschmoments M_{FW} die Momentanforderung an die erste Antriebsquelle 2, also an die aufgeladene Brennkraftmaschine, durch die Punkte A, B, F und E definiert.

Nach einer alternativen vorteilhaften Weiterbildung des erfindungsgemäßen Verfahrens wird dann, wenn der Ladezustand des Energiespeichers 4 relativ hoch ist, die Momentanforderung an die erste Antriebsquelle 2 derart verzögert und/oder reduziert, dass bei einer treppenartigen oder sprungartigen Erhöhung des Fahrerwunschmoments M_{FW} die Momentanforderung an die erste Antriebsquelle 2 auf das Fahrerwunschmoment relativ schnell kontinuierlich erhöht wird (Punkte A und D der Fig. 3), wobei jedoch dieser zeitliche Gradient kleiner als der maximale, zeitliche Gradient für die Erhöhung der Momentanforderung an die erste Antriebsquelle 2 ist.

Nach dieser zweiten alternativen, vorteilhaften Weiterbildung der Erfindung wird demnach bei Anliegen einer treppenartigen oder sprungartigen Erhöhung des Fahrerwunschmoments M_{FW} die Momentanforderung an die erste Antriebsquelle 2 in Fig. 3 durch die Punkte ADE definiert bzw. bestimmt.

Wie bereits ausgeführt, wird die Verzögerung und/oder Reduktion in der Momentanforderung an die erste Antriebsquelle 2, also an die aufgeladene Brennkraftmaschine, durch eine Momentanforderung an die zweite Antriebsquelle 3, die vorzugsweise als elektrische Maschine ausgeführt ist, kompensiert. In Fig. 4 ist über einen durch die Momentanforderung an die zweite Antriebsquelle 3 in den Antriebstrang bewirkten Energieeintrag E_{EM} der zweite Antriebsquelle 3 einerseits ein absoluter Emissionsausstoß A des Hybridantriebs 1, nämlich der ersten Antriebsquelle 2 desselben, und andererseits eine auf den Energieeintrag E_{EM} der zweiten Antriebsquelle 3 bezogene, spezifische Emissionseinsparung ΔA/E_{EM} aufgetragen.

So zeigt Fig. 4, dass durch die Momentanforderungen, die bei einem relativ hohen Ladezustand des Energiespeichers 4 vorgegeben werden, also durch die Momentanforderungen gemäß den Punkten ABFE bzw. ADE, einerseits relativ viel Energie E_{EM} durch die zweite Antriebsquelle 3 in den Abtrieb eingetragen wird, dass jedoch auch die absoluten Emissionen A stark reduziert werden können. Die auf den Energieeintrag E_{EM} durch die elektrische Maschine 3 bezogene, spezifische Reduzierung der Abgasemissionen ΔA/E_{EM} ist jedoch jeweils relativ gering.

Dann, wenn der Ladezustand des Energiespeichers 4 relativ gering ist, wird die Momentanforderung an die erste Antriebsquelle 2, nämlich an die aufgeladene Brennkraftmaschine, derart verzögert und/oder reduziert, dass bei einer treppenartigen oder sprungartigen Erhöhung des Fahrerwunschmoments M_{FW} die Momentanforderung an die erste Antriebsquelle 2 zunächst sprungartig oder mit maximalem Gradienten maximal auf das maximal saugmotorisch ohne Aufladung bereitstellbare Moment (Punkt B in Fig. 3) erhöht wird, und dass anschließend die Momentanforderung an die erste Antriebsquelle auf das Fahrerwunschmoment M_{FW} langsam kontinuierlich erhöht wird, also mit einem relativ geringen zeitlichen Gradienten. Dieser wird in Fig. 3 durch die Punkte B und E definiert.

Fig. 4 zeigt, dass bei einer Momentanforderung an die erste Antriebsquelle 2, die durch die Punkte ABE definiert wird, absolut gesehen die Emissionen A nur relativ gering reduziert werden können, dass sich jedoch eine relativ große, spezifische Abgasreduzierung ΔA/E_{EM} bereitstellen lässt.

Wie bereits ausgeführt, werden die erfindungsgemäßen Momentanforderungen abhängig vom Ladezustand des Energiespeichers 4 bei einem abgasturboaufgeladenen Ottomotor mit Saugrohr- und Direkteinspritzung durch die Steuerungseinrichtung 5 im geschichteten Betrieb des Ottomotor genutzt, also dann, wenn derselben mit einem Verbrennungsluft-Kraftstoff-Verhältnis λ»1 unter Teillast betrieben wird. Bei einem relativ hohen Ladezustand des Energiespeichers 4 wird eine Momentanforderung an die erste Antriebsquelle 2 gemäß den Verläufen ABFE oder ADE gewählt, bei einem relativ geringem Ladezustand des Energiespeichers 4 wird hingegen eine Momentanforderung an die erste Antriebsquelle 2 gemäß dem Verlauf ABE durch die Steuerungseinrichtung 5 vorgegeben. Die Reduzierung der Momentanforderung an die erste Antriebsquelle 2 wird durch eine entsprechende Momentanforderung an die zweite Antriebsquelle 3 kompensiert.

Dann, wenn nachfolgend der Energiespeicher 4 wieder aufgeladen werden soll, wird bei einem abgasturboaufgeladenen Ottomotor mit Vormischung von Verbrennungsluft und Kraftstoff zum Aufladen des Energiespeichers 4 im generatorischen Betrieb der zweiten Antriebsquelle 3 eine Betriebspunktverschiebung oder Umschaltung des Ottomotors durchgeführt, um im generatorischen Betrieb der zweiten Antriebsquelle 3 den Ottomotor mit einem Verbrennungsluft-Kraftstoff-Verhältnis λ=1 und demnach in einem quantitativen Lastregelungsbereich zu betreiben. Bei einer Betriebspunktverschiebung wird an der ersten Antriebsquelle 2, also an der aufgeladenen Brennkraftmaschine, das von derselben bereitgestellte Moment erhöht, um so bei etwa gleicher Drehzahl der ersten Antriebsquelle 2, also der aufgeladenen Brennkraftmaschine, den Betriebspunkt derselben vom geschichteten Verbrennungsbetriebsbereich in den quantitativen Lastregelungsbetriebsbereich zu verlagern. Bei einer Umschaltung des Betriebsbereichs der ersten Antriebsquelle 2 bleibt das von derselben bereitgestellte Moment in etwa unverändert, dasselbe wird lediglich um die generatorische Momentaufnahme der generatorisch betriebenen zweiten Antriebsquelle 3 erhöht.

Der Einsatz der Erfindung soll bei abgasturboaufgeladenen Ottomotoren mit Saugrohreinspritzung als auch bei abgasturboaufgeladenen Ottomotoren mit Kraftstoffdirekteinspritzung zum Einsatz kommen, die über alle Betriebspunkte bzw. Betriebsbereiche mit einem Verbrennungsluft-Kraftstoff-Verhältnis λ=1 betrieben werden können.

Darüberhinaus können abgasturboaufgeladene Ottomotoren mit Kraftstoffdirekteinspritzung auch mit λ»1 betrieben (geschichteter Betrieb) werden.

Ebenso kann die Erfindung dann zum Einsatz kommen, wenn die erste Antriebsquelle 2 des Hybridantriebs 1 als abgasturboaufgeladener Dieselmotor ausgebildet ist, der über alle Betriebspunkte bzw. Betriebsbereiche mit einem Verbrennungsluft-Kraftstoff-Verhältnis λ»1 betrieben wird. In diesem Fall wird dann zur nachfolgenden Aufladung des Energiespeichers 4 der Dieselmotor in einen sogenannten Teilhomogenbetrieb oder Homogenbetrieb (HCCI-Betrieb) berieben, um im generatorischen Betrieb der zweiten Antriebsquelle 3 den Energiespeicher 4 bei möglichst geringen Emissionen des Dieselmotors 2 aufzuladen.

Das erfindungemäße Verfahren wird durch die Steuerungseinrichtung 5 ausgeführt bzw. die Ausführung des Verfahrens durch die Steuerungseinrichtung 5 gesteuert und/oder geregelt. Die Steuerungseinrichtung 5 tauscht hierzu unmittelbar oder mittelbar über Zwischenschaltung einer weiteren Steuerungseinrichtung mit der ersten Antriebsquelle 2, der zweiten Antriebsquelle 3, dem Energiespeicher 4 und dem Fahrpedal 10 Daten aus. Die Steuerungseinrichtung 5 beeinflusst auf die obige Art und Weise bei einer Erhöhung des Fahrerwunschmoments am Fahrpedal 10 zur Gewährleistung eines kraftstoffverbrauchsreduzierten und emissionsreduzierten Betriebs des Hybridantriebs 1 abhängig von einem Ladezustand des Energiespeichers 4 die Momentanforderung an die erste Antriebsquelle 2 und kompensiert die hierdurch bewirkte reduzierte Dynamik durch eine Momentanforderung an die zweite Antriebsquelle 3. Weiter steuert und/oder regelt die Steuerungseinrichtung 5 auf die obige Art und Weise das nachfolgende Aufladen des Energiespeichers 4.

### Bezugszeichen

- 1: Hybridantrieb
- 2: erste Antriebsquelle/ aufgeladene Brennkraftmaschine
- 3: zweite Antriebsquelle
- 4: Energiespeicher
- 5: Steuerungseinrichtung
- 6: Schnittstelle
- 7: Daten
- 8: Daten
- 9: Daten
- 10: Fahrpedal
- 11: Daten
- 12: Kennlinie
- 13: Kennlinie

## Patentansprüche

1. Verfahren zum Betreiben eines Hybridantriebs (1) mit einer als aufgeladene Brennkraftmaschine ausgebildeten ersten Antriebsquelle (2) und einer insbesondere als elektrische Maschine ausgebildeten zweiten Antriebsquelle (3), wobei die zweite Antriebsquelle (3) zum Aufladen eines mit derselben zusammenwirkenden Energiespeichers (4) generatorisch und zum Entladen des Energiespeichers (4) motorisch betrieben wird, wobei abhängig von einem Fahrerwunschmoment einerseits von der ersten Antriebsquelle (2) und andererseits von der zweiten Antriebsquelle (3) im motorischen Betrieb derselben Antriebsmoment anforderbar ist, **dadurch gekennzeichnet, dass** bei einer Erhöhung des Fahrerwunschmoments zur Gewährleistung eines kraftstoffverbrauchsreduzierten und emissionsreduzierten Betriebs des Hybridantriebs (1) abhängig von einem Ladezustand des Energiespeichers (4) eine Momentanforderung an die erste Antriebsquelle (2) verzögert und/oder reduziert wird, wobei die hierdurch bewirkte, reduzierte Dynamik durch eine Momentanforderung an die zweite Antriebsquelle (3) kompensiert wird.

2. Verfahren nach Anspruch 1, **dadurch gekennzeichnet, dass** dann, wenn der Ladezustand des Energiespeichers (4) relativ hoch ist, die Momentanforderung an die erste Antriebsquelle (2) derart verzögert und/oder reduziert wird, dass bei einer treppenartigen oder sprungartigen Erhöhung des Fahrerwunschmoments die Momentanforderung an die erste Antriebsquelle (2) zunächst sprungartig oder mit maximalem zeitlichen Gradienten maximal auf das maximal saugmotorisch ohne Aufladung bereitstellbare Moment erhöht wird, dass anschließend die Momentanforderung in etwa konstant gehalten wird, und dass darauffolgend die Momentanforderung an die erste Antriebsquelle (2) auf das Fahrerwunschmoment relativ schnell kontinuierlich erhöht wird.

3. Verfahren nach Anspruch 1, **dadurch gekennzeichnet, dass** dann, wenn der Ladezustand des Energiespeichers (4) relativ hoch ist, die Momentanforderung an die erste Antriebsquelle (2) derart verzögert und/oder reduziert wird, dass bei einer treppenartigen oder sprungartigen Erhöhung des Fahrerwunschmoments die Momentanforderung an die erste Antriebsquelle (2) auf das Fahrerwunschmoment relativ schnell kontinuierlich erhöht wird.

4. Verfahren nach einem der Ansprüche 1 bis 3, **dadurch gekennzeichnet, dass** dann, wenn der Ladezustand des Energiespeichers (4) relativ gering ist, die Momentanforderung an die erste Antriebsquelle (2) derart verzögert und/oder reduziert wird, dass bei einer treppenartigen oder sprungartigen Erhöhung des Fahrerwunschmoments die Momentanforderung an die erste Antriebsquelle (2) zunächst sprungartig oder mit maximalem zeitlichen Gradienten maximal auf das maximal saugmotorisch ohne Aufladung bereitstellbare Moment erhöht wird, und dass anschließend die Momentanforderung an die erste Antriebsquelle (2) auf das Fahrerwunschmoment relativ langsam kontinuierlich erhöht wird.

5. Verfahren nach einem der Ansprüche 2 bis 4, **dadurch gekennzeichnet, dass** die kontinuierliche Erhöhung auf das Fahrerwunschmoment linear durchgeführt wird, nämlich relativ schnell mit einem relativ hohen zeitlichen Gradienten und relativ langsam mit einem relativ geringen zeitlichen Gradienten, wobei der relativ hohe zeitliche Gradient kleiner als der maximale zeitliche Gradient ist.

6. Verfahren nach einem der Ansprüche 1 bis 5, **dadurch gekennzeichnet, dass** dann, wenn die erste Antriebsquelle (2) ein abgasturboladeraufgeladener Dieselmotor ist, die Beeinflussung der Momentanforderung mit einem Verbrennungsluft-Kraftstoff-Verhältnis λ»1 für den Dieselmotor durchgeführt wird, wobei zum nachfolgenden Aufladen des Energiespeichers (4) im generatorischen Betrieb der zweiten Antriebsquelle (3) der Dieselmotor (2) in einem Teilhomogenbetrieb oder Homogenbetrieb zu betreiben.

7. Verfahren nach einem der Ansprüche 1 bis 5, **dadurch gekennzeichnet, dass** dann, wenn die erste Antriebsquelle (2) ein abgasturboladeraufgeladener Ottomotor mit Vormischung von Verbrennungsluft und Kraftstoff ist, die Beeinflussung der Momentanforderung im geschichteten Betrieb des Ottomotors durchgeführt wird, in welchem derselbe mit einem Verbrennungsluft-Kraftstoff-Verhältnis λ»1 betrieben wird, wobei zum nachfolgenden Aufladen des Energiespeichers (4) im generatorischen Betrieb der zweiten Antriebsquelle (3) eine Betriebspunktverschiebung oder Umschaltung des Ottomotors durchgeführt wird, um im generatorischen Betrieb der zweiten Antriebsquelle (3) den Ottomotor mit einem Verbrennungsluft-Kraftstoff-Verhältnis λ=1 zu betreiben.

8. Verfahren nach einem der Ansprüche 1 bis 5, **dadurch gekennzeichnet, dass** dann, wenn die erste Antriebsquelle (2) ein abgasturboladeraufgeladener Ottomotor Kraftstoffdirekteinspritzung ist, die Beeinflussung der Momentanforderung mit einem Verbrennungsluft-Kraftstoff-Verhältnis λ=1 für den Ottomotor durchgeführt wird.

9. Steuerungseinrichtung (5) eines Hybridantriebs (1), die unmittelbar oder mittelbar unter Zwischenschaltung einer weiteren Steuerungseinrichtung mit einem Hybridantrieb (1), der eine als aufgeladene Brennkraftmaschine ausgebildete erste Antriebsquelle (2) und eine insbesondere als elektrische Maschine ausgebildete zweite Antriebsquelle (3) aufweist, mit einem mit der zweiten Antriebsquelle zusammenwirkenden Energiespeicher (4) und mit einem Fahrpedal (10) Daten austauscht, **dadurch gekennzeichnet, dass** die Steuerungseinrichtung (5) bei einer Erhöhung des Fahrerwunschmoments am Fahrpedal (10) zur Gewährleistung eines kraftstoffverbrauchsreduzierten und emissionsreduzierten Betriebs des Hybridantriebs (1) abhängig von einem Ladezustand des Energiespeichers (4) eine Momentanforderung an die erste Antriebsquelle (2) verzögert und/oder reduziert und die hierdurch bewirkte reduzierte Dynamik durch eine Momentanforderung an die zweite Antriebsquelle (3) kompensiert.

10. Steuerungseinrichtung nach Anspruch 9, **dadurch gekennzeichnet, dass** dieselbe die Ausführung des Verfahrens nach einem der Ansprüche 1 bis 8 steuert und/oder regelt.
